# EUROPÄISCHE PATENTSCHRIFT

(11) **EP 1 089 952 B1**
(45) Veröffentlichungstag und Bekanntmachung des Hinweises auf die Patenterteilung: **28.05.2003**
(21) Anmeldenummer: 99917784.3
(22) Anmeldetag: 13.03.1999
(51) Int. Cl.: C04B 35/52, C04B 35/80, C04B 35/83, C04B 35/573, C04B 38/06, C04B 41/84, C04B 41/87, C04B 41/45

(54) **VERFAHREN ZUR HERSTELLUNG VON FORMKÖRPERN AUF DER BASIS VON KOHLENSTOFF, CARBIDEN UND/ODER CARBONITRIDEN**
METHOD FOR PRODUCING SHAPED BODIES ON THE BASIS OF CARBON, CARBIDES AND/OR CARBONITRIDES
PROCEDE DE PRODUCTION DE CORPS MOULES A BASE DE CARBONE, DE CARBURES ET/OU DE CARBONITRURES

(30) Priorität: 26.05.1998 DE 19823507
(43) Veröffentlichungstag der Anmeldung: 11.04.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: KLEBER, Siegmar, D-01705 Pesterwitz (DE)
(86) Internationale Anmeldenummer: DE9900720
(87) Internationale Veröffentlichungsnummer: WO99061390

(56) Entgegenhaltungen:
- WO-A-99/11581
- DE-A- 2 330 887
- DE-B- 1 055 432
- PATENT ABSTRACTS OF JAPAN vol. 096, no. 008, 30. August 1996 & JP 08 109077 A (SANGYO GIJUTSU KENKYUSHO K.K.), 30. April 1996
- C.E. BYRNE ET AL.: "Carbonization of wood for advanced materials application" CARBON, Bd. 35, Nr. 2, 1997, Seiten 259-266, XP002086598 in der Anmeldung erwähnt

## Beschreibung

Die Erfindung betrifft ein Verfahren zur Herstellung von Formkörpern auf der Basis von Kohlenstoff, Carbiden und/oder Carbonitriden unter Verwendung von biogenen Rohstoffen. Die Kohlenstoffformkörper zeichnen sich wahlweise durch ein fasriges oder körniges Gefüge aus. Besonderes Anwendungsgebiet der Erfindung findet sich im Anwendungsgebiet der Kohlenstoffwerkstoffe und Siliciumcarbidwerkstoffe, wie z.B. im Maschinen-, insbesondere Fahrzeugbau (beispielsweise Bremsen, Lager usw.)

Es ist bekannt, dass als Rohstoffe für C-Fasern PAN-, andere Polymer-, Lignin-(Biopolymer, z.B. JP04194029 A 1992 in D01F009-17) sowie Pech- und Kohle-Precursoren verwendet werden . Darüber hinaus sind auch Regeneratcellulose-Precursoren, die durch Auflösen und Neuformierung von nativer Cellulose gewonnen werden, als Rohstoffe für C-Fasern geeignet [J.-B. Donnet, R. C. Bansal: Carbon Fibers, Marcel Dekker 1990, pp. 11].

Der Nachteil der C-Faser-Technologien besteht darin, dass zunächst eine Precursor-Faser erzeugt werden muss, die danach in eine C-Faser konvertiert wird. Diese Technologie ist durch eine Vielzahl energiereicher Verfahrensstufen, bei denen umweltschädigende Substanzen freigesetzt oder verarbeitet und nicht erneuerbare Ressourcen verbraucht werden sowie eine negative CO₂ - Bilanz gekennzeichnet. Ein weiterer Nachteil ist, dass die Bildung der C-Fasern nicht in den Werkstoffherstellungsprozess integriert wird, wie das der Fall ist, wenn von Naturfaser-Polymer-Verbundwerkstoffen als Precursorwerkstoff ausgegangen wird.

Es ist auch bekannt, dass mehr oder weniger körnige Kohlenstoff- und Graphitwerkstoffe aus Koksen und Teeren, Pechen bzw. Kohlenteerpechen hergestellt werden, die den fossilen Rohstoffträgern Kohle und/oder Erdöl entstammen [Ullmanns Enzyklopädie der technischen CHemie, 5. Auflage, Vol. A5, pp. 95]. Mit ihrer bergmännischen Gewinnung ist ein großer Aufwand nebst erheblichen Beeinträchtigungen der Umwelt verbunden.

Darüber hinaus gibt es neuere Versuche zur Herstellung von Werkstoffen aus Naturstoffen. So werden aus Holz Formteile herausgearbeitet und einer kontrollierten Pyrolyse unterzogen. Dabei bleibt jedoch die mehr oder minder grobe Holzstruktur erhalten, so dass die Kohlenstoffformkörper nur ungenügende mechanische Eigenschaften haben [C. E. Byrne, D. C. Nagle: Carbonization of Wood for Advanced Materials Application, Carbon Vol. 35, No. 2,1997, p. 259-266]. Solche Körper eignen sich aber für eine nachfolgende Infiltration mit flüssigem Silicium und die damit einhergehende Umsetzung zu einem SiC-enthaltenden Werkstoff [DE 4203773 A1; A. Kaindl, T. Lifka, P. Greil: Biomorphic SiC-Ceramics with Cellular Microstruktures, Poster Presentation at the 99th American Ceramic Society Meeting, Cinncinnati, May 4-7, 1997].

Der Nachteil dieser Verfahren besteht darin, dass die Struktur der Werkstoffe weitgehend invariabel ist, weil Struktur und Zusammensetzung des Formteiles durch die jeweilige Wuchszone festgelegt sind sowie ungenügende und stark streuende mechanische Eigenschaften erhalten werden. Durch die stark anisotrope, strukturdeterminierte Schwindung bei der Pyrolyse wird die Teilegeometrie ungünstig beeinflusst.

Es ist weiterhin bekannt, SiC-Keramik durch Infiltration einer CFC-Vorform mit flüssigem Si herzustellen [M. Leuchs, J. Spörer: Langfaserverstärkte Keramik - eine neue Werkstoffklasse mit neuen Leistungen, Keramische Zeitschrift 49 [1] 1997, S. 18 ff.]. Neben den schon o. g. Nachteilen ist dieses Verfahren wegen dem hohen Preis von CFC kostenintensiv.

**Darüber hinaus ist in der zum Anmeldezeitpunkt dieser europäischen Patentanmeldung noch unveröffentlichten PCT-Patentanmedlung der Anmelderin selbst WO 99/11581 (gilt als Stand der Technik gemäß Artikel 54 (3) EPÜ) ein "Verfahren zur Herstellung von Kohlenstoff-Verbundwerkstoffen, kohlenstoffhaltigen Werkstoffen, carbidischen und/oder carbontridischen Werkstoffen beschrieben, dass unter anderem dadurch gekennzeichnet ist, dass die zur Herstellung eingesetzten Rohstoffe ganz oder teilweise biogene Stoffe** **sind, die durch unvollständiges Carbonisieren in ein hauptsächlich kohlenstoffhaltigen Produkt konvertiert werden."**

Es ist nunmehr Aufgabe der vorliegenden Erfindung ein Verfahren der genannten Art vorzuschlagen, das sämtliche Nachteile des Standes der Technik nicht aufweist.

Somit ist es Aufgabe der Erfindung ein Verfahren der genannten Art vorzuschlagen, bei dem C-Werkstoffe aus biogenen Rohstoffen herstellbar sind und dadurch weniger Verfahrensstufen und Energie erfordern, kostengünstig und ökologischer erzeugt werden können, den Verbrauch von in der Verarbeitung bedenklichen Substanzen und umweltbelastende Verfahrenschritte minimieren und bei dem die Rohstoffe ganz oder teilweise aus erneuerbaren Ressourcen stammen.

Es ist weiterhin Aufgabe der Erfindung, Verfahren anzugeben, die zu kohlenstoffhaltigen, carbidischen und /oder carbonitridischen Werkstoffen führen, deren Gefüge variabel gestaltet und somit unterschiedlichen funktionellen Beanspruchungen angepasst werden kann unter Nutzung der Synthesevorleistungen der Natur, insbesondere der strukturellen Besonderheiten biogener Stoffe.

Insbesondere ist es Aufgabe der Erfindung ein Verfahren der genannten Art anzugeben, das wenig aufwendig und kostengünstig ist, und das auf Rohstoffen basiert, die einfach verfügbar sind.

Erfindungsgemäß wird diese Aufgabe mit einem Verfahren zur Herstellung von Formkörpern auf der Basis von Kohlenstoff, Carbiden und/oder Carbonitriden gemäß einem oder mehreren der Ansprüche von **1 bis 25** gelöst.

Erfindungsgemäß sind bei diesem Verfahren die zur Herstellung verwendeten Rohstoffe ganz oder teilweise, beispielsweise zu 100% bis 10%, biogene Stoffe. Diese biogenen Stoffe werden durch **vollständiges** Carbonisieren in ein hauptsächlich kohlenstoffhaltiges Produkt konvertiert, anschließend zu hochkohlenstoffhaltigen Formkörpern verarbeitet und danach zu porösen oder dichten Formkörpern auf der Basis von Kohlenstoff, Carbiden oder Carbonitriden weiterverarbeitet.

In einer günstigen Ausgestaltung der erfindungsgemäßen Lösung werden organische Formkörper mit organisch gebundenen biogenen Komponenten, z.B. Naturfaserverbund-Werkstoffe mit polymerer Matrix, carbonisiert und danach zu porösen oder dichten Formkörpern auf der Basis von Kohlenstoff, Carbiden und/oder Carbonitriden weiterverarbeitet.

Vorzugsweise sind die biogenen Rohstoffe faserhaltige Pflanzenanteile von Faserpflanzen bzw. die Fasern von solchen Faserpflanzen wie Flachs, Hanf, Sisal, Miscanthus, Getreide, Bambus, Laub- oder Nadelholz, Baumwolle, Jute, Kenaf, Ramie, Kokos u.a.m., Pflanzenfasern mit Resten von verholzten Bestandteilen oder sogar ganze Stengel bzw. Ganzpflanzen, niedermolekulare oder amorphe pflanzliche Produkte wie Stärke, Reishüllen, Getreidekleie, Zucker oder Lignin und/oder tierische Fasern wie Haare, Wolle oder sonstige vorzugsweise faserhaltigen Bestandteile. Es ist aber auch möglich, dass die biogenen Rohstoffe solche sind, die vor ihrer Weiterverarbeitung regeneriert werden (z.B. Regeneratcellulose) oder dazu ähnliche Rohstoffe, die synthetisch erzeugt werden.

Es hat sich als günstig erwiesen, wenn die einzusetzenden biogenen Rohstoffe in Form von Vliesen, Matten, Gewebe, lose oder kompaktiert, in verschiedenen Aufbereitungszuständen und/oder geschäumt vorliegen.

Es ist weiterhin günstig, wenn die biogenen Rohstoffe vor oder nach der **vollständigen Carbonisierung** (Konvertierung) zerkleinert werden und die Carbonisierung unter Schutzgasatmosphäre und im Temperaturbereich 300°C bis 1000°C erfolgt und gegebenenfalls eine Wärmebehandlung bis 2800°C angeschlossen wird.

Des weiteren ist vorteilhaft, wenn die aus der Carbonisierung stammenden Produkte wie Fasern, Pulver oder geschäumte Körper so verwendet oder vorher Langfasern zu Kurzfasern oder feinen Pulvern mit isotropen Teilchen zerkleinert und gegebenenfalls granuliert werden.

Im allgemeinen ist es günstig, wenn die Carbonisierung unter Schutzgas wie Argon oder Stickstoff, unter kohlenstoffhaltiger Atmosphäre wie Kohlenmonoxid, Kohlendioxid, Methan, Propan, usw. bei Atmosphären- oder erhöhtem Gasdruck erfolgt, oder die Ausgangsstoffe oder Formkörper in pulverisierten oder granulierten Kohlenstoffspezies (Koks, Ruß, biogenstämmiger Kohlenstoff) bzw. in kohlenstofffreisetzenden Mitteln eingebettet werden.

Im besonderen kann es auch vorteilhaft sein, wenn die Carbonisierung unter Vakuum oder unter Vakuum bei partieller Anwesenheit kohlenstoffhaltiger Gase oder von Kohlestoffspezies erfolgt, um die Ausbeute an C zu erhöhen und/oder mittels des Vakuums den Prozess zu steuern.

Es ist ebenfalls günstig, wenn die Carbonisierung zusätzlich unter mechanischem Druck von 0,1 - 200 MPa, vorzugsweise 0,1 - 50 MPa, erfolgt.

Zwecks Erhöhung der Ausbeute an Kohlenstoff und zur Strukturverbesserung können auch noch nichtmetallische Antioxidantien wie Borverbindungen (z.B. Borax) oder metallische Antioxidantien wie unedle metallische Feinstpulver als Einbettungsmittel angewendet werden.

Es ist auch vorteilhaft nach der Carbonisierung bzw. nach der Formgebung der Carbonisierungsprodukte eine oxydierende Behandlung von 0 - 72 h bei 160°C bis 250°C mit einem Sauerstoffpartialdruck von 0 - 2 MPa oder eine Auslagerung an Luft anzuschließen.

Zur Herstellung von Kohlenstoffformkörpern ist es vorteilhaft, wenn die biogenen Rohstoffe ohne Zusätze oder nur mit Zusätzen biogenen Ursprungs mittels bekannter Verfahren der Kalt- und Warmformgebung zu Formkörpern verarbeitet werden und diese carbonisiert werden, die pulvrigen oder fasrigen Produkte nach der Carbonisierung und eventueller Zerkleinerung und Granulierung mittels bekannter Verfahren der Kalt- und Warmformgebung und mittels bekannter Formgebungshilfsmittel auf der Basis von Teerpechen oder synthetischen Polymeren zu Formkörpern verarbeitet werden, deren Dichte größer als 0,3 g/cm³ ist und die Dichte der hergestellten hochkohlenstoffhaltigen Körper durch wiederholtes Verkoken von infiltriertem Pech, Polymer, Lignin u.ä. bei Temperaturen 300°C bis 1000°C erhöht wird und eventuell die Verkokung unter mechanischem Druck ausgeführt wird.

In diesem Fall ist es vorteilhaft, wenn die angewandten Formgebungsmittel ebenfalls biogene Rohstoffe sind. Es ist ebenfalls günstig, wenn schäumungsfähiger biogener Rohstoff wie Stärke, Zucker u.ä. und biogene Fasern vermischt werden, zu Formkörpern frei oder mit äußerem allseitigem mechanischem Druck durch ausdehnungsbegrenzende Kokillen (Formgebungswerkzeuge) verschäumt werden und danach carbonisiert werden.

Zur Herstellung der Kohlenstoffformkörper ist es weiterhin günstig, wenn Formkörper aus biogenen Verbundwerkstoffen mit verkokbarer Matrix eingesetzt werden, und diese vor ihrer Weiterverarbeitung carbonisiert werden.

Zur Herstellung von Kohlenstoffbasis- und/oder Carbidbasis-Verbundwerkstoffen ist es vorteilhaft, wenn die Formkörper, die ein verkokbares Hilfsmittel enthalten, nach einer Zwischenverkokung oder geschäumte, carbonisierte Formkörper mit Metallen wie Kupfer, Antimon, Magnesium, Silicium und anderen bekannten Tränkmetallen infiltriert werden; oder die Formkörper, die ein verkokbares Hilfsmittel enthalten, nach einer Zwischenverkokung oder geschäumte, carbonisierte Formkörper mit Polymeren infiltriert werden, wobei die Polymere siliciumorganische Verbindungen aus den Gruppen Polysiloxane, Polysilazane und/oder Polycarbosilane (z.B. Polymethylsiloxan) sein können; oder den biogenen Fasern oder ihren Pyrolysaten carbidbildende Elemente wie Wolfram, Titan oder andere zugemischt werden mit dem Ziel der Herstellung faserförmiger Produkte in einem carbothermischen Prozess.

In bestimmten Anwendungsfällen kann es vorteilhaft sein, wenn anstelle der Infiltration vorstehende Stoffe den pulvrigen oder festen carbonisierten Produkten zugemischt werden und erst danach kompaktiert und einer verfestigenden Wärmebehandlung mit oder ohne Druck durch Aushärtungt Polymerisieren/Plastifizierung/Schmelzen des Polymers/Metalls unterzogen werden.

Zur Herstellung von Siliciumcarbidbasis-Verbundwerkstoff ist es äußerst vorteilhaft, wenn der Kohlenstoffformkörper noch mit flüssigem Silicium bei Temperaturen bis maximal 1800°C zur Voll- oder Teilumwandlung in Siliciumcarbid infiltriert wird mit dem Ziel der Herstellung von Siliciumcarbidbasis-Verbundwerkstoffen mit 0 - 100% C, 50 - 100% SiC und 0 - 50% Si.

Dabei kann es vorteilhaft sein, wenn der Kohlenstoffformkörper mit siliciumorganischen Verbindungen vor der Infiltration mit flüssigem Silicium versetzt oder getränkt wird und sich eine Aushärtung und thermische Zersetzung der siliciumorganischen Verbindung anschließt, die aber Bestandteil des Gesamtprozesses sein können, oder über die Gasphase beschichtet werden, wobei die siliciumorganischen Verbindungen Polysiloxane, Polysilazane und/oder Polycarbosilane (z.B. Polymethylsiloxan) sein können.

Für bestimmte funktionelle Anwendungen des erfindungsgemäßen Verfahrens (z. B. Kollektoren) ist es weiterhin vorteilhaft, die feinen schlauchartigen Porenkanäle, die aus dem pflanzlichen Lumen resultieren, zwecks Speicherung, Zwischenspeicherung und Transport mit Gasen und/oder Flüssigkeiten zu füllen.

Mit der vorliegenden Erfindung werden die Nachteile des Standes der Technik beseitigt und es ist insbesondere von Vorteil, dass die Strukturhierarchie der biogenen Rohstoffe in den Werkstoff transformiert wird. Besondere Vorteile der Erfindung sind:
- Große Variabilität bei der Gestaltung der Gefüge und Eigenschaftsprofile der Werkstoffe einschließlich der Möglichkeit ihrer Anpassung an unterschiedliche Beanspruchungen
- Herstellbarkeit fasriger oder isotroper C-Werkstoffe und faserstrukturierter SiC-Verbundwerkstoffe
- Anwendbarkeit von Verfahren der plastischen Formgebung im Grünzustand
- Technisch und ökonomisch günstige Erzeugung von großformatigen Flächengebilden
- Einsparung von Verfahrensstufen und Energie sowie verringerter Aufwand bei der mechanischen Bearbeitung als Voraussetzung für die kostengünstige Herstellung der Werkstoffe und Bauteile
- Breite Anwendbarkeit auf dem Sektor der C- und SiC-Werkstoffe
- Einsatz von Rohstoffen aus erneuerbaren Ressourcen
- Bessere ökologische Gesamtbilanz infolge Verbrauchsreduzierung synthetischer und fossilstämmiger Bindemittel sowie CO₂-Neutralität

Als besonderes Anwendungsgebiet speziell für SiC-Werkstoffe haben sich unter Bewertung besonderer Vorteile, die sich aus der erfindungsgemäßen Lösung ergeben, faserstrukturierte SiC - C - Verbunde für Bremsen, Lager, sonstige Verschleißbauteile, Teile mit komplizierter Gestalt sowie großformatige, dünnwandige Flächengebilde, Brennelemente, Hochtemperatur-Filter u.ä. gezeigt.

Das erfindungsgemäße Verfahren wird in nachfolgenden Ausführungsbeispielen näher erläutert.

### Ausführungsbeispiel 1

Flachsfasern, taugeröstet und Kieferfasern wurden unter einem Druck von 500 MPa kalt und ohne Hinzufügen von Hilfsmitteln zu Stäben 8 × 60 × 7 mm³ verpresst. Die Körper hatten eine Pressdichte von 1,09 bzw. 1,27 g/cm³. Sie wurden zunächst bis 850 °C in einer Inertgasatmosphäre, bestehend aus fließendem Stickstoff, carbonisiert und anschließend nach einer 30-minütigen Haltedauer bis zu einer Temperatur von 2200 °C, Haltedauer 60 min, wärmebehandelt.

Die Stäbe lagen nach dieser Behandlung in Form von locker gepackten Kohlenstofffasern mit einer Dichte von 0,5 g/cm³ vor. Diese Formlinge wurden in einer 31 %igen Lösung von Polymethylsiloxan in Hexan getränkt und bei 40 °C, 1h in Luft abgelüftet. In diesem Zustand war es bei Raumtemperatur möglich, die Proben unter geringem Druck nachzuverdichten oder umzuformen. Das Aushärten bei 250 °C, 1h in Luft führte zu Kohlenstoffverbundwerkstoffen mit duromerer Matrix, die folgende Eigenschaften im Vergleich mit einem kunstharzimprägnierten Kohlenstoffwerkstoff aus Koks/Pech hatten:

**Tabelle 1:**

| **Mechanische Eigenschaften von Kohlenstoffverbundwerkstoffen,** **kunstharzimprägniert, auf der Basis von fasrigem Biokohlenstoff im Vergleich mit** **einem herkömmlichen, analogen Werkstoff auf der Basis von Koks** | | | | |
|---|---|---|---|---|
| **Rohstoff** | **Rohdichte** | **Biegebruchfestigkeit** | **Elastizitätsmodul** | **Bruchdehnung** |
| | **g/cm**^{**3**} | **MPa** | **GPa** | **%** |
| Flachsfaser | 1,14 | 40 | 20 | 0,4 |
| Kieferfaser | 0,98 | 3 | 22 | 0,3 |
| Koks [1] | 1,7 | 45 | 12 | keine Angabe |

| | | | | |
|---|---|---|---|---|
| [1] Prospekt Schunk Kohlenstofftechnik GmbH: Kohlenstoff und Graphit für mechanische Anwendungen, Kohlenstoff-Graphit, kunstharzimprägniert, FH27Z2 | | | | |

Bei durchaus gleichwertigen Eigenschaften im Falle des langfasrigen Flachs-Rohstoffes sind dafür nur die Verfahrensschritte Formgeben, Carbonisieren, Teilgraphitieren, Imprägnieren, Nachverdichten, für den Kohlenstoffwerkstoff aus Koks dagegen die Verfahrensschritte Calcinieren, Aufbereiten, Mischen mit Pechbinder, Formgeben, Brennen, Graphitieren, Imprägnieren nötig. Darüber hinaus wurde der erfindungsgemäße Kohlenstoffwerkstoff ohne die Verwendung eines Pechbinders, d. h. bindemittelfrei, hergestellt.

### Ausführungsbeispiel 2

Proben nach dem Ausführungsbeispiel 1 wurden nach dem Dochtverfahren unter Vakuum mit Si infiltriert, wobei die maximale Temperatur 1700 °C und die Haltedauer bei dieser Temperatur 60 min betrug.

Die an Biegestäben 4 × 3 mm² bestimmten mechanischen Eigenschaften enthält nachfolgende Tabelle 2 im Vergleich mit zwei herkömmlichen, analogen Werkstoffen.

**Tabelle 2:**

| **Mechanische Eigenschaften von SiC - C - Si - Verbundwerkstoffen auf** **der Basis von fasrigem Biokohlenstoff im Vergleich mit herkömmlichen,** **analogen Werkstoffen** | | | | |
|---|---|---|---|---|
| **Rohstoff** | **Rohdichte** | **Biegebruchfestigkeit** | **Elastizitätsmodul** | **Bruchdehnung** |
| | **g/cm**^{**3**} | **MPa** | **GPa** | **%** |
| Flachsfaser | 2,81 | 353 | 224 | 0,2 |
| Kieferfaser | 2,72 | 272 | 178 | 0,2 |
| C-PAN [2] | 1,9 | 200 | 75 | 0,2 |
| SiO₂/Koks [3] | 3,1 | 350 | 360 | 0.1 |

| | | | | |
|---|---|---|---|---|
| [2] M. Leuchs, J. Spörer: Langfaserverstärkte Keramik - eine neue Werkstoffklasse mit neuen Leistungen, Keramische Zeitschrift 48 [1] 1997, S. 18 - 22 | | | | |
| [3] E. Gugel: "Nichtoxidkeramik" im Handbuch der Keramik, 1986, S. 3 ff | | | | |

Es ist ersichtlich, dass die Anwendung des erfindungsgemäßen Verfahrens einen technisch bedeutenden Zuwachs im Zähigkeitsmaß Biegebruchdehnung im Vergleich mit der herkömmlichen Technologie [3] ergibt. Gegenüber einem Verfahren, bei dem von einem CFC-Formteil, das vergleichsweise kostenintensiv ist, ausgegangen wird [2], ergibt sich ein höheres Festigkeitsniveau.

## Patentansprüche

1. Verfahren zur Herstellung von Formkörpern auf der Basis von Kohlenstoff, Carbiden und/oder Carbonitriden, **dadurch gekennzeichnet, dass** die zur Herstellung verwendeten Rohstoffe ganz oder teilweise biogene Stoffe sind, die biogenen Stoffe durch vollständiges Carbonisieren in ein hauptsächlich kohlenstoffhaltiges Produkt konvertiert werden, anschließend zu hochkohlenstoffhaltigen Formkörpern verarbeitet werden und danach zu porösen oder dichten Formkörpem auf der Basis von Kohlenstoff, Carbiden und/oder Carbonitriden weiterverarbeitet werden, wobei die vollständige Carbonisierung (Konvertierung) im Temperaturbereich 300°C bis 1000°C erfolgt und eine Wärmebehandlung bis 2800°C angeschlossen wird.

2. Verfahren nach Anspruch 1, **dadurch gekennzeichnet, dass** organische Formkörper mit organisch gebundenen biogenen Komponenten , z.B. Naturfaser-Verbundwerkstoffe mit polymerer Matrix, carbonisiert werden und danach zu porösen oder dichten Formkörpern auf der Basis von Kohlenstoff, Carbiden und Carbonitriden weiterverarbeitet werden.

3. Verfahren nach Anspruch 1 oder 2, **dadurch gekennzeichnet, dass** die zur Herstellung verwendeten Rohstoffe zu 100 bis 10% biogene Stoffe sind.

4. Verfahren nach einem oder mehreren der Ansprüche von 1 bis 3, **dadurch gekennzeichnet, dass** die biogenen Rohstoffe in Form von Vliesen, Matten, Gewebe, lose oder kompaktiert, in verschiedenen Aufbereitungszuständen und/oder geschäumt vorliegen.

5. Verfahren nach einem oder mehreren der Ansprüche von 1 bis 4, **dadurch gekennzeichnet, dass** die biogenen Rohstoffe vor oder nach vollständigen Carbonisierung (Konvertierung) zerkleinert werden und die vollständige Carbonisierung unter Schutzgasatmosphäre erfolgt.

6. Verfahren nach Anspruch 5, **dadurch gekennzeichnet, dass** die aus der Carbonisierung stammenden Produkte zerkleinert und gegebenenfalls granuliert werden.

7. Verfahren nach Anspruch 5 oder 6, **dadurch gekennzeichnet, dass** die Carbonisierung unter Schutzgas, unter kohlenstoffhaltiger Atmosphäre bei Atmosphären- oder Gasdruck erfolgt, oder die Ausgangsstoffe oder Formkörper in pulverisierten oder granulierten Kohlenstoffspezies bzw. in kohlenstofffreisetzenden Mitteln eingebettet werden.

8. Verfahren nach einem oder mehreren der Ansprüche von 5 bis 7, **dadurch gekennzeichnet, dass** die Carbonisierung unter zusätzlichen mechanischen Druck von 0,1-200 MPa erfolgt.

9. Verfahren nach Anspruch 8, **dadurch gekennzeichnet, dass** die Carbonisierung unter zusätzlichem mechanischen Druck von 0,1-50 MPa erfolgt.

10. Verfahren nach einem oder mehreren der Ansprüche von 1 bis 9, **dadurch gekennzeichnet, dass** zur Herstellung von Kohlenstoffformkörpern die biogenen Rohstoffe ohne Zusätze oder nur mit Zusätzen biogenen Ursprungs mittels bekannter Verfahren der Kalt- und Warmformgebung zu Formkörpern verarbeitet und diese carbonisiert werden.

11. Verfahren nach einem oder mehreren der Ansprüche von 1 bis 9, **dadurch gekennzeichnet, dass** zur Herstellung von Kohlenstoffformkörpern die biogenen Rohstoffe nach ihrer Carbonisierung und eventueller Zerkleinerung und Granulierung mittels bekannter Verfahren der Kalt- und Warmformgebung und mittels bekannter Formgebungshilfsmittel auf der Basis von Teerpechen oder synthetischen Polymeren zu Formkörpern verarbeitet werden.

12. Verfahren nach Anspruch 10 oder 11, **dadurch gekennzeichnet, dass** die Dichte der hergestellten Formkörper größer als 0,3 g/cm³ ist.

13. Verfahren nach Anspruch 12, **dadurch gekennzeichnet, dass** die Dichte der hergestellten hochkohlenstoffhaltigen Körper durch wiederholtes Verkoken von infiltriertem Pech, Polymer, Lignin u. ä. bei Temperaturen von 300°C bis 1000°C erhöht wird.

14. Verfahren nach Anspruch 13, **dadurch gekennzeichnet, dass** die Verkokung unter mechanischem Druck ausgeführt wird.

15. Verfahren nach einem oder mehreren der Ansprüche 10 bis 14, **dadurch gekennzeichnet, dass** schäumungsfähiger biogener Rohstoff wie Stärke, Zucker u.a. und biogene Fasern vermischt werden, zu Formkörpern frei oder mit äußerem allseitigem mechanischen Druck durch ausdehnungsbegrenzende Kokillen (Formgebungswerkzeuge) in Intergasatmosphäre oder Vakuum unter der Einwirkung von Wärme verschäumt werden und danach weiter carbonisiert werden.

16. Verfahren nach einem oder mehreren der Ansprüche 10 bis 15, **dadurch gekennzeichnet, dass** zur Herstellung der Kohlenstoffformkörper Formkörper aus biogenen Verbundwerkstoffen mit verkokbarer Matrix eingesetzt werden und diese vor ihrer Weiterverarbeitung carbonisiert werden.

17. Verfahren nach einem oder mehreren der Ansprüche von 1 bis 16, **dadurch gekennzeichnet, dass** zur Herstellung von Kohlenstoffbasis- und/oder Carbidbasis-Verbundwerkstoffen die Formkörper, die ein verkokbares Hilfsmittel enthalten, nach einer Zwischenverkokung oder geschäumte, carbonisierte Formkörper mit Metallen, wie Kupfer, Antimon, Magnesium, Silicium und anderen bekannten Tränkmetallen infiltriert werden, mit dem Ziel der Herstellung faserförmiger Produkte in einem carbothermischen Prozess.

18. Verfahren nach einem oder mehreren der Ansprüche von 1 bis 16, **dadurch gekennzeichnet, dass** die Formkörper, die ein verkokbares Hilfsmittel enthalten, nach einer Zwischenverkokung oder geschäumte, carbonisierte Formkörper mit Polymeren infiltriert werden; oder den biogenen Fasern oder ihren Pyrolysaten carbidbildende Elemente wie Wolfram, Titan oder andere zugemischt werden mit dem Ziel der Herstellung faserförmiger Produkte in einem carbothermischen Prozess.

19. Verfahren nach Anspruch 17 oder 18, **dadurch gekennzeichnet, dass** die Kohlenstoffformkörper vor ihrer Infiltration einer Hochtemperatur-Wärmebehandlung unterzogen werden.

20. Verfahren nach einem oder mehreren der Ansprüche von 17 bis 19, **dadurch gekennzeichnet, dass** die Polymere siliciumorganische Verbindungen aus den Gruppen Polysiloxane, Polisilazane und/oder Polycarbosilane sind.

21. Verfahren nach einem oder mehreren der Ansprüche von 17 bis 20, **dadurch gekennzeichnet, dass** anstelle der Infiltration vorstehende Stoffe den pulvrigen oder fasrigen carbonisierten Produkten zugemischt werden und erst danach kompaktiert und einer verfestigenden Wärmebehandlung mit oder ohne Druck durch Aushärtung/Polymerisieren/Plasifizierung/Schmeizen des Polymers/Metalls unterzogen werden.

22. Verfahren nach einem oder mehreren der Ansprüche von 1 bis 21, **dadurch gekennzeichnet, dass** zur Herstellung von Siliciumcarbidbasis-Verbundwerkstoffen der Kohlenstoffformkörper zur Voll- oder Teilumwandlung in Siliciumcarbid noch mit flüssigem Silicium bei Temperaturen bis maximal 1800°C infiltriert wird.

23. Verfahren nach Anspruch 22, **dadurch gekennzeichnet, dass** der Kohlenstoffformkörper vor der Infiltration mit flüssigem Silicium mit siliciumorganischen Verbindungen versetzt wird und sich eine Aushärtung und thermische Zersetzung der silicumorganischen Verbindung anschließen, die aber Bestandteil des Gesamtprozesses sein können.

24. Verfahren nach Anspruch 23, **dadurch gekennzeichnet, dass** das Versetzten mit siliciumorganischen Verbindungen mittels Tränken, oder mittels Einbringen über die Gasphase erfolgt, oder den pulvrigen oder fasrigen carbonisierten Produkten siliciumorganische Verbindungen zugemischt werden oder damit bzw. mit Kohlenstoff über die Gasphase beschichtet werden.

25. Verfahren nach einem oder mehreren der Ansprüche von 1 bis 24, **dadurch gekennzeichnet, dass** die feinen, schlauchartigen Porenkanäle der nach diesen Ansprüchen hergestellten Werksstoffe, die aus dem pflanzlichen Lumen resultieren, zwecks Speicherung, Zwischenspeicherung und Transport mit Gasen und/oder Flüssigkeiten gefüllt werden.

## Claims

1. Process for producing shaped bodies based on carbon, carbides and/or carbonitrides, **characterized in that** the raw materials used for producing the shaped bodies are wholly or partly biogenic materials, the biogenic materials are converted into a mainly carbon-containing product by complete carbonization, this product is subsequently processed to form shaped bodies having a high carbon content and then processed further to give porous or dense shaped bodies based on carbon, carbides and/or carbonitrides, with the complete carbonization (conversion) being carried out in the temperature range from 300°C to 1 000°C and being followed by a heat treatment at up to 2 800°C.

2. Process according to Claim 1, **characterized in that** organic shaped bodies comprising organically bound biogenic components, e.g. natural fibre composites having a polymer matrix, are carbonized and then processed further to give porous or dense shaped bodies based on carbon, carbides and carbonitrides.

3. Process according to Claim 1 or 2, **characterized in that** from 100 to 10% of the raw materials used for producing the shaped bodies are biogenic materials.

4. Process according to one or more of Claims 1 to 3, **characterized in that** the biogenic raw materials are in the form of nonwovens, mats, woven fabrics, loose or compacted, in various processed states and/or in foamed form.

5. Process according to one or more of Claims 1 to 4, **characterized in that** the biogenic raw materials are comminuted before or after complete carbonization (conversion) and the complete carbonization is carried out under a protective gas atmosphere.

6. Process according to Claim 5, **characterized in that** the products from the carbonization are comminuted and, if desired, granulated.

7. Process according to Claim 5 or 6, **characterized in that** the carbonization is carried out under protective gas, under a carbon-containing atmosphere at atmospheric or gas pressure, or the starting materials or shaped bodies are embedded in pulverized or granulated carbon species or in materials which release carbon.

8. Process according to one or more of Claims 5 to 7, **characterized in that** the carbonization is carried out under an additional mechanical pressure of 0.1-200 MPa.

9. Process according to Claim 8, **characterized in that** the carbonization is carried out under an additional mechanical pressure of 0.1-50 MPa.

10. Process according to one or more of Claims 1 to 9, **characterized in that**, to produce shaped carbon bodies, the biogenic raw materials are processed without additives or only with additives of biogenic origin by means of known methods of cold and hot forming to produce shaped bodies and the latter are carbonized.

11. Process according to one or more of Claims 1 to 9, **characterized in that**, to produce shaped carbon bodies, the biogenic raw materials are, after carbonisation and possible comminution and granulation, processed to shaped bodies by means of known methods of cold and hot shaping and with the aid of known shaping auxiliaries based on tar pitches or synthetic polymers.

12. Process according to Claim 10 or 11, **characterized in that** the density of the shaped bodies produced is greater than 0.3 g/cm³.

13. Process according to Claim 12, **characterized in that** the density of the bodies having a high carbon content which are produced is increased by repeated carbonization of infiltrated pitch, polymer, lignin and the like at temperatures of from 300°C to 1 000°C.

14. Process according to Claim 13, **characterized in that** the carbonization is carried out under mechanical pressure.

15. Process according to one or more of Claims 10 to 14, **characterized in that** foamable biogenic raw materials such as starch, sugar, etc. and biogenic fibres are mixed, are foamed without applied pressure or under mechanical pressure applied from all sides by moulds which limit expansion (shaping tools) in an inert gas atmosphere or in vacuo under the action of heat and are then carbonized further.

16. Process according to one or more of Claims 10 to 15, **characterized in that** the shaped carbon bodies are produced using shaped bodies composed of biogenic composites having a carbonizable matrix and these shaped bodies are carbonized before being processed further.

17. Process according to one or more of Claims 1 to 16, **characterized in that**, to produce composites based on carbon and/or carbide, the shaped bodies containing a carbonizable auxiliary after intermediate carbonization or foamed, carbonized shaped bodies are infiltrated with metals such as copper, antimony, magnesium, silicon and other known impregnation metals, with the aim of producing fibrous products in a carbothermic process.

18. Process according to one or more of Claims 1 to 16, **characterized in that** the shaped bodies containing a carbonizable auxiliary after intermediate carbonization or foamed, carbonized shaped bodies are infiltrated with polymers, or the biogenic fibres or their pyrolysates are admixed with carbide-forming elements such as tungsten, titanium or others, with the aim of producing fibrous products in a carbothermic process.

19. Process according to Claim 17 or 18, **characterized in that** the shaped carbon bodies are subjected to a high-temperature heat treatment prior to infiltration.

20. Process according to one or more of Claims 17 to 19, **characterized in that** the polymers are organosilicon compounds selected from the group consisting of polysiloxanes, polysilazanes and polycarbosilanes.

21. Process according to one or more of Claims 17 to 20, **characterized in that**, in place of infiltration, the pulverulent or fibrous carbonized products are admixed with materials of the type mentioned above and are only then compacted and subjected to a strengthening heat treatment, with or without application of pressure, by curing/polymerization/plasticization/melting of the polymer/metal.

22. Process according to one or more of Claims 1 to 21, **characterized in that**, to produce composites based on silicon carbide, the shaped carbon body is infiltrated with liquid silicon at temperatures up to a maximum of 1 800°C to convert it completely or partially into silicon carbide.

23. Process according to Claim 22, **characterized in that** the shaped carbon body is treated with organosilicon compounds prior to infiltration with liquid silicon and the organosilicon compounds are then cured and thermally decomposed, which may also be parts of the overall process.

24. Process according to Claim 23, **characterized in that** the treatment with organosilicon compounds is carried out by means of impregnation or by means of introduction via the gas phase, or the pulverulent or fibrous carbonized products are admixed with organosilicon compounds or coated therewith or with carbon via the gas phase.

25. Process according to one or more of Claims 1 to 24, **characterized in that** the fine, tube-like pore channels of the materials produced according to these claims, which result from the plant lumen, are filled with gases and/or liquids for the purposes of storage, temporary storage and transport.

## Revendications

1. Procédé de production de corps moulés à base de carbone, de carbures et/ou de carbonitrures,
**caractérisé en ce que**
les matières premières utilisées pour la production sont des substances totalement ou partiellement biogènes, les substances biogènes sont converties par carbonisation complète en un produit contenant principalement du carbone, ensuite sont transformées en corps moulés ayant une teneur élevée en carbone et après cela sont à nouveau traités en corps moulés poreux ou denses à base de carbone, carbures et/ou carbonitrures, dans laquelle la carbonisation complète (conversion) s'effectue dans une plage de températures de 300 à 1000°C et est suivie d'un traitement thermique jusqu'à 2800°C.

2. Procédé selon la revendication 1,
**caractérisé en ce que**
les corps moulés organiques ayant des composants biogènes liés organiquement par des matériaux à base de fibres naturelles ou composites avec une matrice polymère, sont carbonisés et ensuite sont transformés ultérieurement en corps moulés poreux ou denses à base de carbone, de carbures et de carbonitrures.

3. Procédé selon la revendication 1 ou la revendication 2.
**caractérisé en ce que**
les matières premières utilisées pour la production sont des substances 100 % à 10 % biogènes.

4. Procédé selon l'une ou plusieurs des revendications 1 à 3,
**caractérisé en ce que**
les matières premières biogènes se présentent sous forme de non-tissés, nattes, tissus, lâches ou compactés, dans différents états de préparation et/ou sous forme de mousse.

5. Procédé selon l'une ou plusieurs des revendications 1 à 4,
**caractérisé en ce que**
les matières premières biogènes sont broyées avant ou après carbonisation (conversion) complète, et la carbonisation complète s'effectue sous atmosphère de gaz protecteur.

6. Procédé selon la revendication 5,
**caractérisé en ce que**
les produits qui proviennent de la carbonisation sont broyés et éventuellement granulés.

7. Procédé selon la revendication 5 ou la revendication 6,
**caractérisé en ce que**
la carbonisation s'effectue sous gaz protecteur, sous atmosphère contenant du carbone, à la pression atmosphérique ou sous pression de gaz ou bien les produits de départ ou les corps moulés sont inclus dans des espèces de carbone pulvérisées ou granulées ou dans des agents qui libèrent du carbone.

8. Procédé selon l'une ou plusieurs des revendications 5 à 7,
**caractérisé en ce que**
la carbonisation s'effectue sous pression mécanique supplémentaire de 0,1 à 200 MPa.

9. Procédé selon la revendication 8,
**caractérisé en ce que**
la carbonisation s'effectue sous pression mécanique supplémentaire de 0,1-50 MPa.

10. Procédé selon l'une ou plusieurs des revendications 1 à 9,
**caractérisé en ce qu'**
on transforme pour la production de corps moulés de carbone les matières première biogènes sans additif ou seulement avec des additifs d'origine biogénique à l'aide des procédés connus de modelage à froid et à chaud, en corps moulés et on carbonise ceux-ci.

11. Procédé selon l'une ou plusieurs des revendications 1 à 9,
**caractérisé en ce que**
pour la production des corps moulés en carbone, les matières premières biogènes sont transformées après leur carbonisation et éventuellement broyage et granulation à l'aide des procédés connus de modelage à froid et à chaud, et à l'aide d'adjuvant de modelage à base d'asphalte artificiel ou de polymères synthétiques, en corps moulés.

12. Procédé selon la revendication 10 ou la revendication 11,
**caractérisé en ce que**
la densité des corps moulés produits est supérieure à 0,3 g/cm³.

13. Procédé selon la revendication 12,
**caractérisé en ce que**
la densité des corps contenant du carbone préparés est augmentée par cokéfaction répétée de brai, de polymère ou de lignine entre autres, infiltrés, à des températures de 300 à 1000°C.

14. Procédé selon la revendication 13,
**caractérisé en ce que**
la cokéfaction est effectuée sous pression mécanique.

15. Procédé selon l'une ou plusieurs des revendications 10 à 14,
**caractérisé en ce qu'**
une matière première biogène capable de mousser, comme des amidons, du sucre et analogues, et des fibres biogènes sont mêlées, sont converties en mousses en corps moulés librement ou avec une pression mécanique de tous côtés par des coquilles qui limitent la dilatation (outils de modelage) sous atmosphère de gaz inerte ou sous vide, en faisant agir la chaleur et ensuite sont carbonisées davantage.

16. Procédé selon l'une ou plusieurs des revendications 10 à 15,
**caractérisé en ce que**
pour la production des corps moulés en carbone, on utilise des corps moulés en matériaux composites biogènes ayant une matrice cokéfiable, et ceux-ci sont carbonisés avant leur transformation ultérieure.

17. Procédé selon l'une ou plusieurs des revendications 1 à 16,
**caractérisé en ce que**
pour la production de matériaux composites à base de carbone et/ou à base de carbure, les corps moulés qui renferment un adjuvant cokéfiable, après une cokéfaction intermédiaire ou les corps moulés transformés en mousse, carbonisés sont infiltrés avec des métaux comme du cuivre, de l'antimoine, du magnésium, du silicium et d'autres métaux d'imprégnation connus, dans le but de la production de produits sous forme de fibres dans un processus carbothermique.

18. Procédé selon l'une ou plusieurs des revendications 1 à 16,
**caractérisé en ce que**
les corps moulés qui renferment un adjuvant cokéfiable, après une cokéfaction intermédiaire ou les corps moulés transformés en mousse, carbonisés sont infiltrés avec des polymères, ou on ajoute en mélange aux fibres biogènes ou à leurs pyrolysats des éléments formateurs de carbure, tels que le tungstène, le titane ou autre, dans le but de fabriquer des produits fibreux dans un procédé carbothermique.

19. Procédé selon la revendication 17 ou 18,
**caractérisé en ce que**
les corps moulés en carbone sont soumis avant leur infiltration à un traitement thermique à haute température.

20. Procédé selon l'une ou plusieurs des revendications 17 à 19,
**caractérisé en ce que**
les polymères sont des composés organiques du silicium choisis dans le groupe des polysiloxanes, des polysilazanes et/ou des polycarbosilanes.

21. Procédé selon l'une ou plusieurs des revendications 17 à 20,
**caractérisé en ce qu'**
au lieu d'une infiltration les substances précédentes sont mélangées aux produits carbonisés pulvérulents ou fibreux, et sont compactées ensuite seulement et sont soumises à un traitement par la chaleur qui solidifie, avec ou sans pression par durcissement/polymérisation/plastification/fusion du polymère/métal.

22. Procédé selon l'une ou plusieurs des revendications 1 à 21,
**caractérisé en ce que**
pour la production de matériaux composites à base de carbure de silicium le corps moulé en carbone est, en vue de la conversion complète ou partielle en carbure de silicium, encore infiltré avec du silicium liquide à des températures allant au maximum jusqu'à 1800°C.

23. Procédé selon la revendication 22,
**caractérisé en ce que**
les solides moulés en carbone avant l'infiltrat avec du silicium liquide sont mélangés avec des composés organiques du silicium, et subissent ensuite un durcissement et une décomposition thermique du composé organique du silicium, qui cependant peuvent être une partie de la totalité du procédé.

24. Procédé selon la revendication 23,
**caractérisé en ce que**
le mélange avec des composés organiques du silicium s'effectue par imprégnation ou à l'aide d'incorporation par l'intermédiaire de la phase gazeuse, ou bien on ajoute par mélange aux produits carbonisés pulvérulents ou fibreux, des composés organiques du silicium, ou encore avec ces derniers ou avec du carbone, on les recouvre en phase gazeuse.

25. Procédé selon l'une ou plusieurs des revendications 1 à 24,
**caractérisé en ce que**
les canaux de pores fins, du type tuyau des matériaux qui résultent du lumen végétal, préparés selon ces revendications, sont remplis aux fins du stockage, du stockage intermédiaire et du transport, avec des gaz et/ou des liquides.
